Europäisches Patentamt

**European Patent Office**

**Office européen des brevets**

(19)

(11) Veröffentlichungsnummer: **0 019 176**
**B1**

(12) **EUROPÄISCHE PATENTSCHRIFT**

(45) Veröffentlichungstag der Patentschrift:
**08.06.83**

(21) Anmeldenummer: **80102422.5**

(22) Anmeldetag: **05.05.80**

(51) Int. Cl.³: **C 02 F 11/12,** B 01 D 37/00,
B 01 D 25/00

(54) **Verfahren zum Entwässern von Klärschlämmen auf Kammerfilterpressen.**

(30) Priorität: **19.05.79 DE 2920350**

(43) Veröffentlichungstag der Anmeldung:
**26.11.80 Patentblatt 80/24**

(45) Bekanntmachung des Hinweises auf die Patenterteilung:
**08.06.83 Patentblatt 83/23**

(84) Benannte Vertragsstaaten:
**AT BE CH DE FR GB IT LI NL SE**

(56) Entgegenhaltungen:

**DE-A-1 916 701**
**DE-A-1 936 805**
**DE-A-2 603 074**
**DE-A-2 653 823**
**DE-A-2 732 018**

**DEGREMONT HANDBUCH, Bauverlag GmbH, Wiesbaden, 1974, Berlin, DE, «Druckfilterung», Seiten 449-450**

(73) Patentinhaber: **BASF Aktiengesellschaft,**
**Carl-Bosch-Strasse 38, D-6700 Ludwigshafen (DE)**

(72) Erfinder: **Sander, Bruno, Dr., Moerikestrasse 10,**
**D-6700 Ludwigshafen (DE)**
Erfinder: **Hess, Klaus, Dr., Sonnenwendstrasse 40,**
**D-6702 Bad Duerkheim 1 (DE)**
Erfinder: **Lintz, Peter, Schinkelstrasse 9,**
**D-6700 Ludwigshafen (DE)**
Erfinder: **Goesele, Walter, Dr.,**
**Albrecht-Duerer-Ring 31B, D-6710 Frankenthal (DE)**

## Verfahren zum Entwässern von Klärschlämmen auf Kammerfilterpressen

Die vorliegende Erfindung betrifft ein Verfahren zum Entwässern von Klärschlämmen, deren Entwässerungsverhalten durch Zugabe von organischen Flockungsmitteln verbessert worden ist, auf einer Kammer-Filterpresse.

Zur Aufkonzentrierung der Schlammfeststoffe in Klärschlämmen werden entweder kontinuierlich arbeitende Entwässerungsmaschinen, wie z. B. Zentrifugen und Siebbandpressen oder Kammerfilterpressen im Chargenbetrieb eingesetzt.

Bei der Entwässerung auf Zentrifugen und Siebbandpressen werden die Klärschlämme in der Regel unmittelbar vor oder während des Entwässerungsvorgangs mit organischen Flockungsmitteln behandelt, um die Entwässerungseigenschaften zu verbessern. Die erzielten Schlammfeststoffgehalte liegen je nach Schlammart nach der Entwässerung auf Zentrifugen im Bereich von 15 bis 25 Gew.-% und nach der Entwässerung auf Siebbandpressen im Bereich von 20 bis 40 Gew.-%. In den genannten Fällen sind die Restwassergehalte noch beträchtlich hoch.

Nach einem anderen Verfahren werden die Klärschlämme einstufig auf einer Kammer-Filterpresse in Schichtdicken zwischen 25 bis 35 mm unter Anwendung hoher Drücke wie z. B. 15 bar entwässert. Als Entwässerungshilfsmittel werden Eisensalze, Kalk und Asche oder sonstige inerte, ein Stützgerüst bildende Stoffe, wie Sand, Steinmehl, Bentonit, feinteilige Kohle usw. zugegeben. Diese Zuschlagstoffe werden in einer Menge von 100 bis 150 Gew.-% bezogen auf den Schlammfeststoff eingesetzt. Obwohl bei diesem Entwässerungsverfahren die Feststoffgehalte der Presskuchen mit 40 bis 60 Gew.-% höherliegen, als bei den oben genannten Verfahren, so betragen doch die eigentlichen Schlammfeststoffgehalte wegen des erforderlichen Zusatzes grösserer Mengen Zuschlagstoffe im allgemeinen nur 20 bis 30 Gew.-%. Eine weitergehende Reduzierung des Schlammvolumens oder des spezifischen Wassergehaltes wird demnach auch hier nicht erreicht.

Es ist ferner bekannt, dass Klärschlämme, die ausschliesslich mit organischen Flockungsmitteln behandelt worden sind, auf Kammer-Filterpressen nicht entwässerbar sind, da die Schlammflocken beim Pumpen, Fördern und Pressen zerstört werden und sich die Presskuchen demzufolge nur schwer von den Filtertüchern ablösen lassen. Diese Nachteile treten besonders ausgeprägt auf, wenn es sich um normale Klärschlämme handelt, deren organischer Anteil an dem Schlammfeststoff grösser als 50 Gew.-% beträgt. Solche Schlämme entstehen durch biologischen Abbau organischer Bestandteile in den Belebungsbecken von Kläranlagen.

Aufgabe der Erfindung war es demnach, ein Entwässerungsverfahren zu erarbeiten, nach dem eine wesentlich höhere Aufkonzentrierung der Schlammfeststoffe erzielt werden kann, als dies nach dem Stande der Technik möglich ist. Eine weitere Aufgabe der Erfindung bestand darin, Klärschlämme, deren Entwässerungsverhalten durch einen Zusatz von organischen Flockungsmitteln verbessert worden ist, unter den extremen Entwässerungsbedingungen auf einer Kammer-Filterpresse derart zu entwässern, ohne dass hierfür die üblichen anorganischen, gerüstsubstanzbildenden Zuschlagstoffe, wie Kalk, Asche, Sand, Steinmehl und/oder Bentonit erforderlich sind.

Diese Aufgaben wurden erfindungsgemäss dadurch gelöst, dass die Hauptmenge des Wassers der geflockten Schlämme in einem der Kammer-Filterpresse vorgeschalteten Verfahrensschritt durch Schwerkraftfiltration ohne Anlegen einer Druckdifferenz abgetrennt wird, und erst dann die eigentliche Druckfiltration auf der Kammer-Filterpresse vorgenommen wird.

Gemäss einer weiteren Ausbildung der Erfindung werden die Klärschlämme nach Zugabe der Flockungsmittellösung zur Verbesserung ihres Entwässerungsverhaltens noch 0,5 bis 5 Minuten, insbesondere 1 bis 3 Minuten in einem Behälter, gegebenenfalls unter Rühren bei Rührerdrehzahlen von 5 bis 50 U/min behandelt, bis sie dem ersten Entwässerungsschritt unterworfen werden.

Als Entwässerungsvorrichtung in der ersten Entwässerungsstufe werden bevorzugt kontinuierlich arbeitende Siebtrommeln, die oberflächenerneuernde Einbauten besitzen, verwendet.

Die Schichtdicken der Filterkammern werden erfindungsgemäss im Bereich von 15 bis 30 mm gegebenenfalls den jeweiligen Klärschlämmen zum Zwecke der Erzielung besonders hoher Schlammfeststoffgehalte angepasst.

Gegebenenfalls können die Klärschlämme noch mit Kohleschlämmen und/oder Klärschlammaschen homogen vermischt werden, bevor die Flockung und die zweistufige Entwässerung erfolgen.

Die nach dem erfindungsgemässen Entwässerungsverfahren erzielten Schlammfeststoffgehalte in dem Filterkuchen liegen überraschenderweise sehr hoch. Sie betragen je nach Schlammart 30 bis 55 Gew.-%, so dass der spezifische Wassergehalt (kg Restwasser je kg Schlammfeststoff) besonders niedrig ist.

Es war ferner überraschend, dass die Klärschlämme durch die erfindungsgemäss durchgeführte Schlammvorbehandlung bereits in der ersten Entwässerungsstufe durch Schwerkraftfiltration bis auf einen Schlammfeststoffgehalt von 10 bis 20 Gew.-% aufkonzentriert werden können und dass diese konzentrierten Schlämme dann ohne Zerstörung der Flockenstruktur unter den Pressbedingungen auf einer Kammer-Filterpresse stabil bleiben, da sich die Filterkuchen einwandfrei und selbsttätig von den Filtertüchern ablösen.

Durch das erfindungsgemässe Verfahren ist es möglich geworden, Klärschlämme auf Kammer-Filterpressen zu entwässern, ohne dass anorganische, gerüstsubstanbildende Stoffe wie z. B. Kalk, Asche, Sand zugeschlagen werden müssen.

Für den Fall, dass die Schlammbeseitigung durch Verbrennen erfolgen soll, können den Klärschlämmen gegebenenfalls noch geringe Mengen eines Kohleschlamms und/oder der anfallenden Klärschlammasche zugegeben werden. Hierbei hat es sich als zweckmässig erwiesen, dass diese Zuschlagstoffe bereits in dem noch nicht geflockten Klärschlamm mit Hilfe eines Mischwerks homogen verteilt werden noch bevor dass erfindungsgemässe Verfahren durchgeführt wird. Als weiterer Vorteil des erfindungsgemässen Verfahrens wurde festgestellt, dass die durch Verbrennung der Filterkuchen erhaltene Klärschlammasche, die infolge der alleinigen Verwendung von organischen Flockungsmitteln kalkfrei ist, ein wirksameres Entwässerungshilfsmittel ist als die Klärschlammasche, die bei der Verbrennung von Filterkuchen entsteht, welche mit anorganischen Entwässerungshilfsmitteln wie Kalk und Eisensalzen konditioniert worden sind (siehe Vergleichsbeispiel 3).

Unter Klärschlämmen sollen verstanden werden: Primärschlämme, die in der Vorklärstufe einer Kläranlage durch Sedimentation oder Flockung erhalten werden, Belebtschlämme (Überschussschlämme), die einer biologischen Kläranlage entstammen, Mischschlämme, die eine Abmischung der vorgenannten Schlämme darstellen, Faulschlämme und mineralisierte Schlämme, die z. B. durch Langzeitbelüftung bei Umgebungstemperatur entstehen. Die Schlämme können kommunaler, industrieller oder gemischter Herkunft sein.

Die Schlammfeststoffgehalte dieser Klärschlämme können innerhalb weiter Grenzen von 0,5 bis 15 Gew.-% schwanken. Im allgemeinen werden jedoch Schlämme eingesetzt, die durch Schwerkraftsedimentation in Eindickern aufkonzentriert worden sind. Die Schlammfeststoffgehalte liegen dann bei Belebtschlämmen im Bereich von 3 bis 6 Gew.-% und bei Primärschlämmen im Bereich von 5 bis 12 Gew.-%.

Als organische Flockungsmittel können prinzipiell die handelsüblichen Marken eingesetzt werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind, / Diese Flockungsmittel unterscheiden sich ausserdem noch durch ihre unterschiedliche elektrische Ladung (kationisch, anionisch oder elektroneutral) und durch ihren Polymerisationsgrad.

Die Auswahl eines geeigneten Flockungsmittels nach Art und Menge erfolgt nach bekannten Methoden meistens bereits im Labormassstab. Die erforderlichen Flockungsmittelmengen liegen im Bereich von 100 bis 400 g/m³ Klärschlamm und sind abhängig von der Art des jeweiligen Klärschlamms und der Feststoffkonzentration.

Die Flockungsmittel werden in Form ihrer 0,05- bis 0,5prozentigen wässrigen Lösungen eingesetzt. Die Herstellung solcher verdünnter Flockungsmittellösungen aus den festen und flüssigen Handelsprodukten erfolgt nach bekannten Methoden in handelsüblichen Vorrichtungen.

Die Flockungsmittellösung wird direkt in die Schlammleitung nach der Schlammpumpe zudosiert. Hierbei können Eintragshilfen, wie z. B. ein Kegelmischer vorteilhaft sein. Die Verweilzeit in der Schlammleitung, in der Klärschlamm und Flockungs- / erhalten werden.

mittellösung vermischt werden, beträgt im allgemeinen nur wenige Sekunden. Nach der bisherigen Praxis werden die geflockten Klärschlämme unmittelbar nach der Zugabe des Flockungsmittels der Entwässerung unterworfen. Es hat sich aber gezeigt, dass die Flockung der Klärschlämme zwar spontan stattfindet, dass bis zur Erreichung einer optimalen Entwässerbarkeit jedoch eine Flockungsreifezeit erforderlich ist. Diese Flockungsreifezeit ist von der Art des Schlamms und der Feststoffkonzentration sowie von der Art des Flockungsmittels abhängig und beträgt im allgemeinen 0,5 bis 3 Minuten und insbesondere 1 bis 2 Minuten.

Für die technische Durchführung wird ein stehender Behälter (Einlauf unter, Ablauf oben) mit Rührer verwendet. Als Rührer wird ein Wendelrührer, dessen Schneckenwendelung an der Welle angebracht ist, oder ein Blattrührer eingesetzt. Die weitere Durchmischung des geflockten Schlamms in diesem Behälter wird bei Rührerdrehzahlen von 5 bis 50 U/min vorgenommen und ist abhängig von der mechanischen Stabilität der jeweiligen Schlämme. Ebenso kann eine liegende Mischtrommel verwendet werden, die für das Umwälzen und Verweilen des geflockten Schlamms entsprechende Einbauten (Wehre) besitzt. Diese Vorrichtung wird besonders bei spezifisch schwereren Klärschlämmen, bei denen die anorganischen Bestandteile überwiegen, verwendet. Nach dieser Schlammvorbehandlung wird der Klärschlamm über weite Rohrstutzen ohne zu pumpen unmittelbar der ersten Entwässerungsvorrichtung zugeleitet.

Bei der beschriebenen Flockung ist noch von besonderer Wichtigkeit, dass eine Überdosierung der Flockungsmittellösung vermieden wird. In einem solchen Fall besteht die Gefahr, dass bei den nachfolgenden Filtrationen die Filtergewebe verschleimen. Dies kann durch Anwendung der in der DE-A-2 837 017 beschriebenen Labormethode kontrolliert werden.

In der ersten Entwässerungsstufe werden die geflockten Klärschlämme der Schwerkraftfiltration unterworfen. Als besonders geeignete Apparate erwiesen sich kontinuierlich arbeitende, zylinderförmige Siebtrommeln. Im Innern dieser Siebtrommeln befindet sich ein zylinderförmiger Käfig, auf dessen Umfangsfläche das Filtergewebe aufgezogen wurde. Die Filtergewebe können aus Metalldraht oder aus Synthesefasern wie z. B. Polypropylen- oder Polyesterfasern bestehen. Die Siebtrommeln besitzen in ihrem Innern ausserdem noch oberflächenerneuernde Einbauten, so dass der Schlamm beim Durchlauf intensiv gewendet wird. Diese Einbauten sind Leitbleche, Wehre oder Hohlwendeln. Die Verweilzeit des zu entwässernden Klärschlamms in der Siebtrommel wird ausser durch die Länge des Apparates und den Durchsatz noch durch den Füllgrad bestimmt. Dieser wiederum ist durch die Höhe der Wehre und durch unterschiedliche Steigungen der Hohlwendeln (Hohlschrauben) beeinflussbar. Die Siebtrommeln arbeiten bei Drehzahlen von 1 bis 20 U/min. Die Verweilzeiten in dieser Entwässerungsstufe betragen 1 bis 15 Minuten und insbesondere 2 bis 5 Minuten.

Nach dieser Schwerkraftfiltration werden Schlammfeststoffgehalte von 10 bis 20 Gew.-% erzielt und bereits 50 bis 80% des Wassers abgetrennt.

Die geflockten und vorentwässerten Klärschlämme werden in einem Zwischenbehälter gesammelt. Von diesem Behälter aus werden dann die Kammer-Filterpressen mit Hilfe von Kolbenmembran- oder Exzenterschneckenpumpen beschickt und die Druckfiltration bei Enddrucken bis zu 15 bar durchgeführt. Es können prinzipiell handelsübliche Kammer-Filterpressen verwendet werden, bei denen jedoch die Abstände der Filterplatten von 30 bis auf 20 mm und in Sonderfällen bis auf 15 mm verkleinert werden, so dass in geringerer Schichtdicke entwässert werden kann. Diese Anpassungen sind besonders bei den schwerer entwässerbaren Belebtschlämmen erforderlich, wenn hohe Schlammfeststoffgehalte erzielt werden sollen. Die optimale Schichtdicke kann durch paarweises Einstellen von Stützgeweben in die Filterkammern ermittelt werden.

Die Filtrierzeiten liegen bei dem erfindungsgemässen Entwässerungsverfahren mit 60 bis 90 Minuten eher günstiger als bei einer einstufigen Entwässerung auf einer Kammer-Filterpresse unter Verwendung anorganischer Entwässerungshilfsmittel. Da durch die vorgeschaltete Entwässerungsstufe das Volumen der Klärschlämme bis auf 40 bis 50% des Ausgangsvolumens vermindert wird, tritt durch die Reduzierung der Schichtdicken keinerlei Kapazitätseinbusse ein. In den meisten Fällen wird sogar die Kapazität der Kammer-Filterpresse erhöht.

Bei der einstufigen Entwässerung auf Kammer-Filterpressen unter Verwendung anorganischer Entwässerungshilfsmittel treten mitunter starke Schwankungen bei den spezifischen Filterwiderständen auf. Es werden Werte bei den noch nicht konditionierten Schlämmen im Bereich von $100 . 10^{12}$ bis $300 . 10^{12}$/g gemessen. Dies führt zu einem erhöhten Verbrauch an Entwässerungshilfsmitteln und zu langen Filtrierzeiten. Diese Schwankungen sind auf Änderungen in der Schlammqualität zurückzuführen. Es wurde nun festgestellt, dass bei dem erfindungsgemässen Entwässerungsverfahren diese Schwankungen nicht oder nur in geringem Masse auftreten, da die Entwässerungseigenschaften der Klärschlämme durch die Flockung durchgreifend verbessert worden sind.

Die erzielten Schlammfeststoffgehalte in den Presskuchen betragen bei Primärschlamm, Faulschlamm und mineralisierten Schlämmen 45 bis 55 Gew.-%, in Sonderfällen bis 60 Gew.-%, bei Mischschlämmen 35 bis 45 Gew.-%, bei Belebtschlämmen 25 bis 30 Gew.-% und bei Mischungen aus Belebtschlämmen und Kohleschlämmen 30 bis 40 Gew.-%.

Durch die hohe Aufkonzentrierung der Schlammfeststoffe nach dem erfindungsgemässen Verfahren ist eine wirtschaftliche Schlammbeseitigung möglich geworden. Im Falle der Deponie führt die Volumenverminderung zu Einsparung von Transportkosten und zu einem geringeren Platzbedarf auf der Deponie. Ein besonderer Vorteil ist gegeben, wenn die Presskuchen verbrannt werden sollen. So sind die meisten Klärschlämme, die auf Schlammfeststoffgehalte von mehr als 35 Gew.-% entwässert werden können, selbsttätig verbrennbar. Ein Zusatz von Kohleschlamm oder sonstigen Zusatzbrennstoffen, wie z. B. stückige Kohle oder Heizöl ist daher nicht mehr erforderlich. Ein weiterer Vorteil besteht darin, dass auf die Verwendung von Kalk verzichtet werden kann, und demzufolge die bekannten durch den Kalk hervorgerufenen Beläge und Verkrustungen an den Verbrennungseinrichtungen nicht mehr auftreten.

Durch das erfindungsgemässe Verfahren werden demnach Energieeinsparungen, eine höhere Betriebssicherheit und eine bessere Kapazitätsausnutzung bei den Entwässerungs- und Verbrennungsvorrichtungen erzielt.

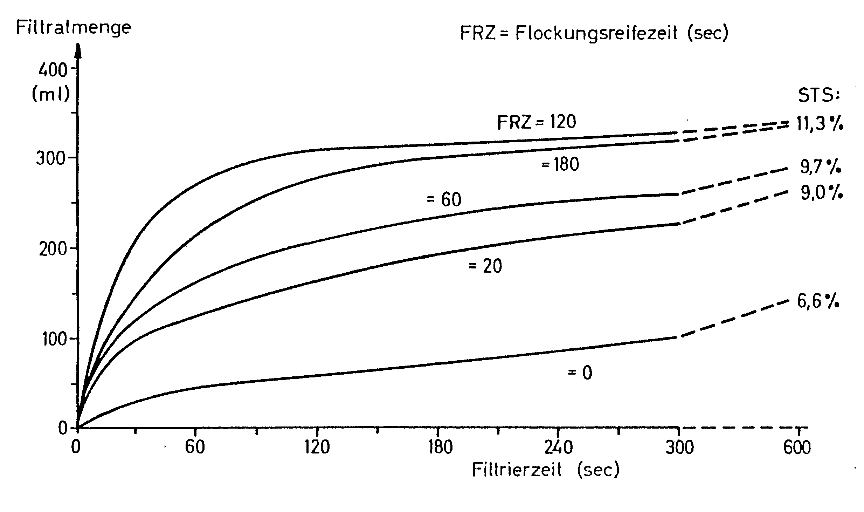

Die Erfindung wird nachfolgend anhand von Beispielen und der Figur näher erläutert. Die dort angegebenen Prozentzahlen sind immer Gew.-%.

Bestimmung der Flockungsreifezeit

500 ml einer zu untersuchenden Schlammprobe werden in ein 1-l-Becherglas (hohe Form) gegeben. Dann wird unter Rühren bei 50 U/min mit einem quadratischen Blattrührer (7 cm Kantenlänge und 6 quadratischen Aussparungen von 1 cm) eine 0,2prozentige Flockungsmittellösung innerhalb von 10 Sekunden zugegeben. Durch Zugabe von Wasser in diese Lösung wird ein einheitliches Volumen eingestellt bei Verwendung verschiedener Flockungsmittelmengen.

Nach dieser kurzen Rührzeit von 10 Sekunden wird der Schlamm unmittelbar auf eine Glasfilternutsche ($\varnothing$ 120 mm) mit eingelegtem Polypropylen-Leinen ($\varnothing$ 110 mm) gegeben und nach 30, 60, 90, 120, 180, 240, 300, 600 Sekunden Schwerkraftfiltration die Filtratmenge notiert. Dieser Versuch wird als Nullversuch ohne Flockungsreifezeit gewertet.

Um die orptimale Flockungsreifezeit zu ermitteln, wird die Rührzeit in den nachfolgenden Einzelversuchen um jeweils 20, 60, 120, 180 Sekunden verlängert. Es werden wiederum die nach den angegebenen Zeitintervallen anfallenden Filtratmengen bestimmt.

*Beispiel 1*

Es wurde ein Mischschlamm aus einer mechanisch-biologischen Kläranlage untersucht, der aus 80 Teilen Belebtschlamm und 20 Teilen Primärschlamm besteht, der bis auf einen Schlammfeststoff-Gehalt von 5,0% eingedickt wurde und dessen organischer Anteil am Schlammfeststoff 63% betrug.

In Vorversuchen wurden das wirksamste Flockungsmittel und die optimale Dosiermenge im Labor bestimmt. Die erforderliche Flockungsreifezeit wurde nach der vorstehend beschriebenen Methode ermittelt. Sie beträgt 120 Sekunden.

Der Schlamm wurde in der Schlammleitung mit einer 0,1prozentigen wässrigen Lösung eines Flockungsmittels mit 40prozentiger kationischer Modifizierung in einer Menge von 300 g/m³ Schlamm versetzt. Der geflockte Schlamm verweilte dann 2 Minuten lang in einem stehenden zylindrischen Behälter unter Rühren. Die Drehzahl des verwendeten Wendelrührers betrug 10 U/min. Nach dieser Behandlung wurde der Schlamm in einer liegenden Siebtrommel, die sich mit einer Drehzahl von 3 U/min drehte, bis auf einen Feststoffgehalt von 11% vorentwässert. Danach wurde der vorentwässerte Schlamm mit Hilfe einer Kolbenmembranpumpe in einer Kammer-Filterpresse, deren Plattenabstände 20 mm betrugen, bis auf einen Enddruck von 15 bar der Druckfiltration unterworfen. Die Filtrierzeit betrug 90 Minuten. Die erhaltenen Filterkuchen waren trocken und lösten sich selbsttätig von den Filtertüchern. Der Schlammfeststoff-Gehalt des Filterkuchens betrug: 36,1% und der Heizwert 890 kcal/kg. Die Filterkuchen konnten ohne Zusatzbrennstoff verbrannt werden.

*Vergleichsbeispiel 1*

Dem eingedickten Mischschlamm von Beispiel 1 wurden in einem Mischwerk Klärschlammasche, $FeSO_4$ in Form einer 20prozentigen wässrigen Lösung und $Ca(OH)_2$ in Form einer 20prozentigen wässrigen Suspension (Kalkmilch) in der angegebenen Reihenfolge zugegeben. Die Feststoffmengen der Zusätze betragen 40, 20 und 40% bezogen auf den Schlammfeststoff-Gehalt. Danach wurde einstufig auf einer Kammer-Filterpresse bei 15 bar entwässert. Die Filtrierzeit betrug 120 Minuten. Der erzielte Feststoffgehalt in den Filterkuchen betrug 42%, darin sind aber nur 21% Schlammfeststoff enthalten. Der Heizwert betrug daher nur 375 kcal/kg.

*Vergleichsbeispiel 2*

Es wurde wie im Beispiel 1 verfahren, jedoch wurde keine Vorbehandlung des geflockten Schlamms unter Einhaltung einer bestimmten Flockungsreifezeit vorgenommen. Ferner wurde auf eine Vorentwässerung verzichtet. Der in der Schlamm-Zulaufleitung geflockte Schlamm wurde direkt auf der Kammer-Filterpresse entwässert.

Es konnte kein trockener Filterkuchen erhalten werden. Der teilweise entwässerte Schlamm klebte an den Filtertüchern. Der Schlammfeststoff-Gehalt betrug ca. 17%.

*Beispiel 2*

Ein Primärschlamm, der in der Vorklärstufe einer Kläranlage eines chemischen Unternehmens nach Sedimentation erhalten worden ist, wurde bis auf 8% Feststoffgehalt durch Schwerkraftsedimentation innerhalb von 24 Stunden eingedickt. Der organische Anteil am Schlammfeststoff betrug 50,8%.

Als wirksamstes Entwässerungshilfsmittel wurde ein Flockungsmittel mit 40prozentiger anionischer Modifizierung (® Sedipur AF 400) festgestellt. Als erforderliche Flockungsreifezeit wurden 180 Sekunden ermittelt.

Der eingedickte Primärschlamm wurde in der Schlammleitung mit einer 0,1prozentigen wässrigen Lösung eines Flockungsmittels mit 40prozentiger anionischer Modifizierung in einer Menge von 160 g/m³ Sclamm versetzt. Dann verweilte der geflockte Schlamm noch 3 Minuten lang unter Rühren bei 40 U/min in einem Mischbehälter und wurde dann in einer liegenden Siebtrommel, die sich mit einer Drehzahl von 5 U/min bewegte, bis auf einen Feststoffgehalt von 18% aufkonzentriert.

Die weitere Entwässerung auf der Kammer-Filterpresse erfolgte wie im Beispiel 1 beschrieben. Die Filtrierzeit betrug 80 Minuten. Die erhaltenen Filterkuchen waren trocken und lösten sich selbsttätig von den Filtertüchern. Der Schlammfeststoff-Gehalt im Filterkuchen betrug: 51,0% und der Heizwert 1345 kcal/kg. Die Filterkuchen konnten ohne Zusatzbrennstoff verbrannt werden.

*Beispiel 3*

Ein Belebtschlamm einer biologischen Kläranlage, der bis auf 4,5% Schlammfeststoff eingedickt worden ist und dessen organischer Anteil am Schlammfeststoff 79% betrug, wurde mit einem Kohleschlamm in einem Rührwerk homogen vermischt. Das Gewichtsverhältnis Schlammfeststoff zu Kohleteilchen betrug 3:1.

Dem Schlammgemisch wurde in der Schlammleitung eine 0,1prozentige wässrige Lösung eines Flockungsmittels mit 90prozentiger kationischer Modifizierung (® Sedipur CF 900) zugegeben und zwar in einer Menge von 6 kg Wirkstoff/t Schlammfeststoff ohne Berücksichtigung des Kohleanteils. Das geflockte Schlammgemisch wurde 120 Sekunden lang bei mässigem Rühren (20 U/min) in einem Reifebehälter behandelt und anschliessend in einer Siebtrommel (Drehzahl: 10 U/min) bis auf einen Gesamtfeststoff-Gehalt von 12,5% vorentwässert.

Der 2. Entwässerungsschritt erfolgte auf einer Kammer-Filterpresse wie im Beispiel 1 beschrieben. Die Filtrierzeit betrug 100 Minuten. Die Filterkuchen lösten sich einwandfrei von den Filtertüchern. Der Feststoffgehalt der Presskuchen betrug 35,8%, davon waren 26,8% Schlammfeststoff und 9,0% Kohle. Der Heizwert der Presskuchen betrug: 1164 kcal/kg.

*Vergleichsbeispiel 3*

Der Mischschlamm aus Beispiel 1 wurde einerseits mit Klärschlammasche I, die durch Verbrennung des geflockten Mischschlamms hergestellt wurde und andererseits mit Klärschlammasche II, die durch Verbrennung des mit anorganischen Entwässerungshilfsmitteln entwässerten Mischschlamms (siehe Vergleichsbeispiel 1) erhalten wurde, homogen vermischt. Klärschlammasche I ist somit kalkfrei und Klärschlammasche II kalkhaltig. Die verwendeten Klärschlamm-Mengen betrugen 29 Teile auf 100 Teile Schlammfeststoff.

Die so hergestellten Gemische wurden mit jeweils 300 mg/l Schlamm eines Flockungsmittels mit 65prozentiger kationischer Modifizierung in einem Behälter unter Rühren (Rührerdrehzahl: 50 U/min) geflockt. Dabei wurde eine Flockungsreifezeit von 2 Minuten eingehalten.

Danach wurde in einer 1. Stufe eine Schwerkraftfiltration durchgeführt. Die vorentwässerten Schlämme wurden dann in einer 2. Stufe auf einer Labor-Stempelpresse 1 Minute bei wachsendem Druck und 2 Minuten bei einem konstanten Druck von 10 bar weiterhin entwässert.

Es wurden folgende Entwässerungsergebnisse erhalten:

| | Probe mit Klärschlammasche | |
|---|---|---|
| | I (kalkfrei) | II (kalkhaltig) |
| Feststoffgehalt (%) nach Schwerkraftfiltration | 11,4 | 9,0 |
| nach Druckfiltration | 39,8 | 34,8 |

Die Ergebnisse zeigen, das im Falle der Verwendung von Klärschlammasche als zusätzliches Entwässerungshilfsmittel bei der Entwässerung von mit organischen Flockungsmitteln vorbehandelten Klärschlämmen kalkfreie Klärschlammaschen günstigere Entwässerungseffekte liefern als kalkhaltige.

## Patentansprüche

1. Verfahren zum Entwässern von Klärschlämmen, deren Entwässerungsverhalten durch Zugabe von organischen Flockungsmitteln verbessert worden ist, auf einer Kammer-Filterpresse, dadurch gekennzeichnet, dass die Hauptmenge des Wassers der geflockten Schlämme in einem der Kammer-Filterpresse vorgeschalteten Verfahrensschritt durch Schwerkraftfiltration ohne Anlegen einer Druckdifferenz abgetrennt wird, und erst dann die eigentliche Druckfiltration auf der Kammer-Filterpresse vorgenommen wird.

2. Verfahren nach Anspruch 1, dadurch gekennzeichnet, dass die Klärschlämme nach Zugabe der Flockungsmittellösung zur Verbesserung ihres Entwässerungsverhaltens noch 0,5 bis 5 Minuten, insbesondere 1 bis 3 Minuten in einem Behälter, gegebenenfalls unter Rühren bei Rührerdrehzahlen von 5 bis 50 U/min verweilen, bis sie dem ersten Entwässerungsschritt unterworfen werden.

3. Verfahren nach Anspruch 1 und 2, dadurch gekennzeichnet, dass als Entwässerungsvorrichtung in der ersten Entwässerungsstufe kontinuierlich arbeitende Siebtrommeln, die oberflächenerneuernde Einbauten besitzen, verwendet werden.

4. Verfahren nach Anspruch 1 bis 3, dadurch gekennzeichnet, dass die Schichtdicke der Filterkammern im Bereich von 15 bis 30 mm den jeweiligen Klärschlämmen zum Zwecke der Erzielung besonders hoher Schlammfeststoffgehalte angepasst werden.

5. Verfahren nach Anspruch 1 bis 4, dadurch gekennzeichnet, dass die Klärschlämme mit Kohleschlämmen und/oder Klärschlammaschen homogen vermischt werden, bevor die Flockung und die zweistufige Entwässerung erfolgen.

## Claims

1. A process for dewatering sewage sludges, the dewatering charachteristics of which have been improved by adding an organic flocculant, on a chamber filter press, wherein the greater part of the water in the flocculated sludges is removed by gravity filtration in a process step upstream of the chamber filter press, without application of a pressure difference, and the actual pressure filtration, on the chamber filter press, is only then carried out.

2. A process as claimed in claim 1, wherein the sewage sludges, after addition of the flocculant solution, are left, to improve their dewatering characteristics, for from 0.5 to 5 minutes, especially from 1 to 3 minutes, in a tank, with or without stirring at from 5 to 50 rpm, before being subjected to the first dewatering step.

3. A process as claimed in claims 1 and 2, wherein a continuously running screening drum, provided with internal fitments which renew the surface of the sludge, is used as the dewatering equipment in the first dewatering stage.

4. A process as claimed in claims 1 to 3, wherein the thickness of the layer of sludge in the filter chambers is from 15 to 30 mm, and is selected, to suit the particular sewage sludge, so as to achieve a particularly high sludge solids content.

5. A process as claimed in claims 1 to 4, wherein the sewage sludge is mixed homogeneously with coal sludge and/or sewage sludge ash before being flocculated and subjected to the two-stage dewatering treatment.

## Revendications

1. Procédé d'assèchement de boues de curage, dont le comportement à l'assèchement a été amélioré par addition de floculants organiques, sur un filtre-presse à plateaux, caractérisé par le fait que la majeure partie de l'eau des boues soumises à floculation est séparée par filtration par gravité, sans appliquer de différence de pression, dans une étape du procédé précédant le filtre-presse à plateaux, et ce n'est qu'ensuite que la filtration sous pression proprement dite est effectuée sur le filtre-presse à plateaux.

2. Procédé selon la revendication 1, caractérisé par le fait que les boues de curage, après addition de la solution de floculant pour améliorer leur comportement à l'assèchement, séjournent encore 0,5 à 5 minutes, en particulier 1 à 3 minutes, dans un réservoir, éventuellement sous agitation, à des vitesses de rotation de l'agitateur de 5 à 50 tours/minute, jusqu'à ce qu'elles soient soumises à la première étape de l'assèchement.

3. Procédé selon la revendication 1 ou 2, caractérisé par le fait qu'on utilise, comme dispositif d'assèchement dans la première phase d'assèchement, des tambours cribleurs fonctionnant en continu et qui possèdent des éléments intérieurs se renouvellant en surface.

4. Procédé selon l'une des revendications 1 à 3, caractérisé par le fait que les épaisseurs de couche des chambres du filtre sont adaptées, dans la zone de 15 à 30 mm, aux boues de curage en vue d'obtenir des teneurs en parties solides des boues particulièrement élevées.

5. Procédé selon l'une des revendications 1 à 4, caractérisé par le fait que les boues de curage sont mélangées de façon homogène avec des boues de charbon et/ou des cendres de boues de curage, avant que ne s'effectuent la floculation et l'assèchement en deux phases.

Filtratmenge

FRZ = Flockungsreifezeit (sec)

400 (ml)

STS:

FRZ = 120

11,3 %

300

= 180

= 60

9,7 %

9,0 %

200

= 20

6,6 %

100

= 0

0

0    60    120    180    240    300    600

Filtrierzeit (sec)

0 019 176